# EUROPÄISCHE PATENTSCHRIFT

(11) **EP 2 292 367 B1**
(45) Veröffentlichungstag und Bekanntmachung des Hinweises auf die Patenterteilung: **04.01.2012**
(21) Anmeldenummer: 09400043.7
(22) Anmeldetag: 08.09.2009
(51) Int. Cl.: B23K 9/32

(54) **Verfahren und Vorrichtung zum Schweißen oder Löten unter Schutzgasatmosphäre**
Method and device for welding or soldering in a protective gas atmosphere
Procédé et dispositif de soudure ou de brasure sous atmosphère de gaz de protection

(43) Veröffentlichungstag der Anmeldung: 09.03.2011
(73) Patentinhaber: EWM Hightec Welding GmbH, 56271 Mündersbach (DE)
(72) Erfinder: Vetten, Adrian, 57629 Steinebach (DE)
(74) Vertreter: Steiniger, Carmen

(56) Entgegenhaltungen:
- EP-A2- 2 042 257
- FR-A1- 2 585 604
- US-A- 5 079 404
- US-A- 5 811 055
- US-B1- 6 244 519

## Beschreibung

Die vorliegende Erfindung betrifft ein Verfahren zum Schweißen oder Löten unter Schutzgasatmosphäre mit einer Schweiß- oder Lötvorrichtung, wobei entstehende Abgase durch wenigstens eine Absaugvorrichtung abgesaugt werden, und eine Vorrichtung zum Schweißen oder Löten unter Schutzgasatmosphäre mit wenigstens einer Absaugvorrichtung zum Absaugen von entstehenden Abgasen.

Die beim Schweißen oder Löten auftretenden hohen Temperaturen führen zur Bildung von Abgasen, insbesondere Rauchgas, die zum Teil gesundheitsschädlich sind. Zum Schutz der in unmittelbarer Nähe des Schweißvorgangs tätigen Arbeitskräfte ist es erforderlich, diese Abgase vom Arbeitsplatz abzusaugen, ehe sich diese mit der Raumluft mischen. Eine besondere Schwierigkeit beim Absaugen der Abgase zeigt sich, wenn Verfahren zum Schweißen oder Löten unter Schutzgasatmosphäre durchgeführt werden. Das während des Schweiß- oder Lötvorgangs applizierte Schutzgas muss die Elektrode und das Werkstück an der Stelle, an der Material aufgeschmolzen wird, sicher abdecken. Grund dafür ist das Vermeiden von Oxidationsvorgängen und anderen Reaktionen, die die Qualität des Verschweißens oder Lötens nachteilig beeinflussen können. Wenn Schutzgas unmittelbar an der Elektrode, die den Lichtbogen erzeugt, oder um diese herum vorgesehen wird, kann dieses nur dann einen stabilen Mantel ausbilden, wenn keine störenden Luftströmungen das Schutzgas fortreißen.

Der Stand der Technik schlägt eine Vielzahl von Absaugeinrichtungen für das Schutzgasschweißen vor. So beschreibt die Druckschrift DE 3 135 381 A1 einen Schutzgasschweißbrenner für das Schweißen mit abschmelzender Elektrode mit einer Gasdüse, einem ummantelten Brennerrohr und mit einer Absaugvorrichtung für Rauchgase, bei der eine eine Ansaugöffnung aufweisende Absaugdüse am Ende eines den Brennerhals konzentrisch umgebenden Außenrohres auf dieses aufgeschoben ist und auch die Gasdüse konzentrisch umgibt. Zudem wird bei dieser Lösung um den Brennergriff herum ein Kanal ausgebildet, durch den die Brennerabgase abgeleitet werden, ohne durch den Brennergriff, diesen aufheizend, hindurch zu strömen. Die Rauchgasabsaugdüse am Ende des Brennerhalses ist als selbstspannende, verschiebbare Düse ausgebildet und weist in dem auf das Außenrohr aufgeschobenen Teil in Längsrichtung Dehnschlitze auf. Durch die Verschiebbarkeit kann die Leistung der Vorrichtung an unterschiedliche Schweißpositionen und Stellungen des Brenners angepasst werden. Je nachdem wie weit die Rauchgasabsaugdüse auf das Außenrohr aufgeschoben ist, werden die Rauchgase aus der unmittelbaren Umgebung der Schweißstelle abgesaugt.

Nachteilig an dieser Lösung ist jedoch, dass keine Veränderung des Absaugvolumenstromes möglich ist. Weiterhin beruht die Positionierung der Rauchgasabsaugdüse allein auf Schätzungen, da keine Kriterien verfügbar sind, die eine genauere Positionierung ermöglichen würden. Insbesondere ist es dadurch nicht möglich, eine sichere Absaugung der Rauchgase zu gewährleisten, ohne eine Minderung der Schutzgasabdeckung in Kauf zu nehmen. Die Absaugströmung fließt dabei außen um den Brenner herum, sodass allein schon durch diese Anordnung Schutzgas von der Schweißstelle nach außen hin weggesaugt wird.

Zur Vermeidung des letztgenannten Nachteils bietet die Druckschrift DE 699 17 238 B2 eine Lösung. Die Druckschrift offenbart einen Schweißbrenner mit umgekehrter Rauchgasabsaugung. Dabei ist das Absaugteil um die Längsseite eines Kernteils angeordnet und das Gaszufuhrteil ist um die Längsseite des Absaugteils angeordnet. In einer weiteren Ausführung ist das Absaugteil eine Röhre, in der die Außenhülle im Wesentlichen konzentrisch im Bezug auf das Kernteil angeordnet ist. In einer weiteren Ausführung wird das Gaszufuhrteil durch wenigstens ein Röhrenteil gebildet, das an der Außenwand des Absaugteils angeordnet ist. Bei der konzentrischen Anordnung von Gaszufuhr und Absaugung ist in einer Ausführungsform der Lösung die Absaugung innerhalb der Gaszufuhr angeordnet. Dadurch wird kein Schutzgas von der Schweißstelle weg nach außen hin gesaugt, sondern Rauchgase und Schutzgas werden nach innen zur Brennerspitze hin, gesaugt, wodurch eine Konzentration des Schutzgases um die Schweißstelle herum erfolgt.

Nachteilig ist jedoch auch hier, dass es keine Verstellmöglichkeit der Absaugdüse gibt und diese damit nicht an den Schweißprozess und die Menge entstehenden Rauchgases angepasst werden kann. Insbesondere sind auch keine Kriterien für eine Einstellung des Absaugvolumenstromes verfügbar, auf deren Basis eine Optimierung hinsichtlich sicherer Schutzgasabdeckung und sauberen Absaugens der Abgase erfolgen könnte.

Die Druckschrift AT 380 194 B offenbart eine Schutzgasschweißpistole mit einer Absaugeinrichtung für den Schweißrauch. Diese besteht aus einem Absaugrohr, welches den Brennerkörper im Wesentlichen konzentrisch umgibt und in den Brennergriff einmündend mit diesem verbunden ist und sich im Brennergriff als Absaugkanal fortsetzt. Das Absaugrohr besteht aus einem gekrümmten und einem geraden Teilstück, wobei das gerade Teilstück sich im Bereich des Brennerkörpers befindet und auf das gekrümmte Teilstück aufbringbar und dort fixierbar ist. Im Absaugkanal ist eine Regulierklappe vorgesehen. Die Regulierklappe ist am brennerseiteigen Ende des Absaugkanals drehbar gelagert und kann gegen die Kraft einer Feder von Hand aus einer den Absaugkanal freigebenden Ruhestellung in eine diesen sperrende Endstellung gebracht werden kann. Weiterhin ist vorgesehen, dass die Regulierklappe mittels eines Elektromagneten automatisch von der Ruhestellung in die Endstellung bringbar ist.

Durch die hier offenbarte Lösung wird zwar das Problem der mangelnden Einstellbarkeit des Absaugstromes gelöst. Dennoch erfolgt die Einstellung der Regulierklappe ausschließlich nach Einschätzung und Erfahrung des Schweißers, was nur eine grobe Schätzung darstellen kann und keinerlei Optimierung des Absaugvorgangs beinhaltet. Die unvermeidliche mangelnde Exaktheit bei der manuellen Einstellung liegt schon darin begründet, dass die Schutzgasabdeckung nicht sichtbar ist und demzufolge nicht manuell optimiert werden kann. Weitere belastbare Kriterien für eine Einstellung der Regulierklappe und damit zur Optimierung der Absaugung sind nicht verfügbar.

In der EP-A-2 042 257 ist eine Schweißvorrichung mit einer Absaugeinrichtung offenbart, wobei die Gasabsaugrate in Abhängigkeit von einem ausgewählten Schweißprogress eingestellt wird.

Insgesamt ist es nach dem Stand der Technik nicht möglich, die Absaugung der Abgase bei einem Schweiß- oder Lötvorgang in der Weise zu optimieren, dass die Abgase sicher abgesaugt werden und zugleich eine stabile Schutzgasatmosphäre für eine saubere und hochqualitative Schweiß- oder Lötnaht gesichert wird. Die Folge sind Bindefehler zwischen Grundmaterial und eingebrachtem Material beim Schweißen oder Löten. Dieser Mangel kann nur durch einen übermäßigen Einsatz von Schutzgas kompensiert werden, was mit erhöhten Kosten verbunden ist.

Aufgabe der Erfindung ist es daher, ein Schweiß- oder Lötverfahren und eine Schweiß- oder Lötvorrichtung zur Herstellung einer sauberen, hochqualitativen Schweiß- oder Lötnaht, die unter einer optimierten, stabilen Schutzgasatmosphäre bei geringem Schutzgasverbrauch und vermindertem Temperaturverlust ausgebildet wird, anzubieten.

Erfindungsgemäß wird die Aufgabe einerseits durch ein Verfahren zum Schweißen oder Löten unter Schutzgasatmosphäre gemäß Anspruch 1 gelöst.

Durch die Steuerung der Absaugung, insbesondere der Absaugleistung und/oder des abzusaugenden Bereiches, in Abhängigkeit von Prozessparametern, die aus dem Schweiß- oder Lötprozess gewonnen werden, wird die Absaugung optimiert. Insbesondere wird die Ausbildung der Schutzgasatmosphäre nicht durch die Absaugung gestört. In der Folge wird eine saubere, hochqualitative Schweiß- oder Lötnaht erzielt. Diese wird insbesondere ohne die Ausbildung von Lunkern und anderen Fehlern in der Naht hergestellt. Weiterhin wird der Schutzgasverbrauch minimiert, da nur so viel Schutzgas auf die Schweißstelle gebracht werden muss, wie auch erforderlich ist. Weiterhin wird ein durch hohe Absaugströmung hervorgerufener Temperaturverlust vermieden. Es resultiert ein insgesamt geringerer Energieverbrauch bei höherer Prozesssicherheit.

Voreingestellte Prozessparameter sind all diejenigen, die bei bestimmten Arten von Energiequellen festgelegt und nicht verstellbar sind. Einstellbare Prozessparameter werden hingegen entweder an Stellelementen, über die die Energiequelle verfügt, eingestellt oder intern von der Energiequelle aufgrund eines Steueralgorithmus festgelegt und eingestellt.

Besonders vorteilhaft ist es, wenn aus den Prozessparametern die Art des durchgeführten Schweiß- oder Lötverfahrens ermittelt wird. Prozessparameter sind die Einstellgrößen, mit denen die Energiequelle auf das folgende Schweiß- oder Lötverfahren vorbereitet wird. Diese ohnehin bekannten und von der Energiequelle an den Einstellaggregaten abgegriffenen Werte können nun vorteilhafter Weise zugleich dazu genutzt werden, die Absaugung in geeigneter Weise zu steuern. Dazu ist es insbesondere wichtig, zunächst festzustellen, um welche Art des durchgeführten Schweiß- oder Lötverfahrens es sich im vorliegenden Fall handelt. Diesem Zweck der automatischen Erkennung der Art des durchgeführten Verfahrens dient die Erfassung der Prozessparameter.

Gemäß der Erfindung umfassen die Prozessparameter eine Brennervorschubgeschwindigkeit, eine Drahtvorschubgeschwindigkeit, einen Drahtdurchmesser, ein Drahtmaterial, eine Stromart und/oder eine Stromrichtung. Aus der Ermittlung eines oder mehrerer dieser Prozessparameter und deren Auswertung in einer Datenverarbeitungseinheit ist eine Feststellung der Art des Schweißprozesses oder des Lötprozesses möglich. Darüber hinaus kann unter Einbeziehung eines Expertensystems, das zahlreiche Kombinationen von Werten dieser Prozessparameter in seinem Speicher abgelegt hat, das aktuell durchzuführende Schweiß- oder Lötverfahren mit hoher Sicherheit determiniert werden. Besonders vorteilhaft an dieser automatischen Erkennung der Art des Schweiß- oder Lötprozesses ist, dass eine Fehlerquelle durch Fehleinstellungen durch den Bediener ausgeschlossen wird. Sind die Parameter des Schweißprozesses einmal richtig eingestellt, dann folgt durch die automatische Verknüpfung auch die richtige Wahl der Einstellungen der Absaugvorrichtung für die Absaugung.

Als vorteilhaft hat sich weiterhin herausgestellt, eine Rauchgastemperatur, eine Rauchgaszusammensetzung, eine Konzentration von im Rauchgas vorhandenen Metallionen, einen Abstand zwischen Brennerspitze und Werkstück und/oder die Art eines Lichtbogens zu erfassen und zusätzlich zu den Prozessparametern zur Steuerung der Absaugung zu verwenden.

Die Hinzunahme weiterer Werte, die durch Sensoren oder auf andere geeignete Weise in Echtzeit während des Schweißprozesses gewonnen werden, tragen zu einer noch sichereren Erkennung der Art des Schweiß- oder Lötprozesses bei und stellen der Steuerung, dem Datenverarbeitungssystem bzw. dem Expertensystem weitere Daten zur Verfügung, auf deren Grundlage die Absaugung gesteuert wird. Dabei lässt die Rauchgastemperatur Rückschlüsse auf die Intensität und Länge des Lichtbogens und damit auf die Menge abzusaugenden Rauchgases zu.

Die Rauchgaszusammensetzung, bei der eine Konzentration im Rauchgas vorhandener Metallionen von besonderer Bedeutung ist, lässt Rückschlüsse auf die Art der verwendeten Materialien zu. Das betrifft sowohl die zu verbindenden Materialien, aber auch die im Schweiß- oder Lötprozess zugesetzten Metalle. Aus dieser Analyse sind wiederum Rückschlüsse auf die Zusammensetzung des Rauchgases und ein entsprechendes Erfordernis einer stärkeren oder schwächeren Absaugung dieser Abgase vom Schweiß- oder Lötprozess möglich.

Der Abstand zwischen Brennerspitze und Werkstück lässt ebenfalls einen Rückschluss auf die Intensität und Länge des Lichtbogens, mittelbar damit auf die Menge des entstehenden Rauchgases, zu. Weiterhin ist die Art des Lichtbogens dahingehend von Bedeutung, ob es sich um einen Kurzlichtbogen oder einen Sprühlichtbogen handelt. Je nach Art des Lichtbogens ist eine unterschiedliche Rauchentwicklung zu erwarten, der jeweils durch ein anderes Absaugregime begegnet werden muss.

Eine günstige Ausgestaltung des erfindungsgemäßen Verfahrens sieht vor, dass die Absaugung koaxial zu einem Schutzgasaustritt eines Brenners durchgeführt wird. Durch die koaxiale Absaugung ist sichergestellt, dass ungeachtet einer bevorzugten Abdriftrichtung des Abgases dieses allseitig von der Schweißstelle abgesaugt wird. Die Schweißstelle ist gewissermaßen mit einem Absaugmantel umgeben, der verhindert, dass Abgase unkontrolliert die Schweißstelle verlassen.

Eine bevorzugte Ausbildung des erfindungsgemäßen Verfahrens betrifft einen Volumenstrom einer Absaugströmung, der in Abhängigkeit von den Prozessparametern des Schweiß- oder Lötprozesses gesteuert wird. Mit dem Volumenstrom der Absaugströmung wird in besonders vorteilhafter Weise in die Absaugung eingegriffen. Dieser Volumenstrom ist deshalb besonders bedeutsam, weil eine zu geringe Absaugung zu viele Abgase von der Schweißstelle entlässt und damit zu einer ineffektiven Absaugung führt. Ein zu hoher Volumenstrom der Absaugströmung hingegen hat zur Folge, dass zu viel Schutzgas mit abgesaugt wird und durch die Schweißstelle nicht ausreichend durch Schutzgas abgedeckt wird. Mit der optimalen Schutzgasabdeckung in Folge einer exakt gesteuerten Absaugströmung ist neben der gesicherten Schutzgasabdeckung eine hohe Schweißnahtqualität ohne Porenbildung unter Vermeidung von Bindefehlern zu erreichen.

Als vorteilhaft hat sich weiterhin herausgestellt, dass eine Position eines Absaugelements der Absaugvorrichtung relativ zu einer Brennerachse in Abhängigkeit von den Prozessparametern des Schweiß- oder Lötprozesses gesteuert wird. Die Positionierung des Absaugelements längs zur Brennerachse beeinflusst den Durchmesser des Absaugkegels in Abhängigkeit von der Absaugströmung. Somit kann in Abhängigkeit von der Ausdehnung der Abgaswolke ein optimaler Absaugkegel ermittelt werden und bei diesem die dazu passende, den Schutzgasmantel schonende Absaugströmung eingestellt werden. Damit ergeben sich durch die Möglichkeit einer Positionierung des Absaugelements zunächst längs zur Brennerachse besondere Vorteile auch im Zusammenhang mit dem steuerbaren Volumenstrom der Absaugströmung.

Zusätzliche Vorteile resultieren aus einer Steuerung der Position des Absaugelements quer zur Brennerachse. Dabei erfolgt ein Verschwenken des Absaugelementes, bevorzugt längst zur Vorschubrichtung nach vorn oder hinten. Damit wird der Absaugkegel, der zunächst durch die Positionierung des Absaugelements längs zur Brennerachse in seiner Größe festgelegt wurde, noch hinsichtlich seiner Position über der Schweißnaht eingestellt. Hierdurch kann in besonders vorteilhafter Weise auf lokale Unterschiede bei der Entstehung der Abgase reagiert werden. Eine noch sicherere Absaugung bei minimiertem Absaugvolumenstrom sind die die Absaugung günstig beeinflussenden Folgen.

Als besonders vorteilhaft zur Ausbildung eines stabilen Absaugkegels hat es sich erwiesen, wenn eine Absaugströmung durch Leitelemente im Absaugelement durch Torsion stabilisiert wird. Eine solche drehende Absaugströmung ist stabiler gegen laterale Strömungen, von denen sie nicht so leicht von der Schweißstelle weggedrängt werden kann. Dadurch erfolgt gleichzeitig eine Stabilisierung der Schutzgasabdeckung, die von der drehenden Absaugströmung geschützt wird, was zu einer Erhöhung der Qualität der Schweißnaht beiträgt.

Die Aufgabe der Erfindung wird weiterhin durch eine Vorrichtung zum Schweißen oder Löten gemäß Anspruch 6 gelöst.

Die Absaugvorrichtung weist dazu neben der Steuereinheit vorzugsweise ein Absauggebläse, wenigstens ein Absaugelement und wenigstens eine Abgasleitung auf. Die Steuereinheit selbst umfasst vorzugsweise eine Datenverarbeitungseinheit sowie wenigstens eine Datenleitung zum Empfang von Daten und wenigstens eine Steuerleitung, mit der Steuersignale zum Absaugelement und/oder zum Absauggebläse geleitet werden. Dadurch kann aus einer Vielzahl von Daten eine sehr genaue, auf die jeweiligen Randbedingungen des Schweiß- oder Lötprozesses abgestimmte und optimierte Einstellung der Absaugparameter der Absaugvorrichtung vorgenommen werden.

Es hat sich insbesondere als günstig erwiesen, dass die Steuereinheit eine Datenverarbeitungseinheit zur Ermittlung der Art des durchgeführten Schweiß- oder Lötprozesses aufweist. Dadurch können die Prozessparameter des Schweiß- oder Lötprozesses zusammenfassend verarbeitet und bewertet werden, sodass die Steuereinheit die Absaugvorrichtung in optimaler Weise steuern kann. Die Datenverarbeitungseinheit kann dazu in besonders vorteilhafter Ausgestaltung ein Expertensystem enthalten, das eine Reihe typischer Kombinationen von Daten enthält und auf dieser Basis einen Vergleich mit der aktuellen Datenlage durchführen kann.

In einer vorteilhaften Ausgestaltung der erfindungsgemäßen Vorrichtung ist vorgesehen, dass die Datenverarbeitungseinheit mit wenigstens einem an oder in der Vorrichtung zum Schweißen oder Löten vorgesehenen Sensor zum Ermitteln einer Rauchgastemperatur, einer Rauchgaszusammensetzung, einer Konzentration von im Rauchgas vorhandenen Metallionen, einem Abstand zwischen Schweiß- oder Lötelektrode und Werkstück und/oder der Art eines Lichtbogens gekoppelt ist. Durch den oder die Sensoren kann der Datenverarbeitungseinheit ein weit größeres Spektrum an Informationen zur Verfügung gestellt werden, als das allein durch die Einbeziehung der einstellbaren oder voreingestellten Prozessparameter des Schweiß- oder Lötprozesses möglich wäre. Insbesondere werden dabei auch Werte berücksichtigt, die sich erst durch ein Zusammenwirken verschiedener Umgebungseinflüsse ergeben und nicht an der Energiequelle eingestellt werden bzw. auf welche die Energiequelle nicht automatisch durch Änderung eines Schweiß- oder Lötparameters reagiert. Für die Ausbildung und die nachfolgende Absaugung der Abgase ist es aber bedeutsam, diese Randbedingungen entweder zu kennen oder zumindest ihre Wirkungen zu detektieren. Auf dieser Basis lässt sich die Absaugung des Abgases in besonders vorteilhafter Weise optimieren.

In einer vorteilhaften Weiterbildung der erfindungsgemäßen Vorrichtung ist ein Absaugelement der Absaugvorrichtung koaxial zu einem Schutzgasaustritt eines Brenners angeordnet. Durch die koaxiale Anordnung des Absaugelements ist gesichert, dass die Absaugung rings um die Schweißstelle gleichmäßig erfolgt. Dabei muss die Absaugung nicht zwangsläufig durch einen koaxial angeordneten Ringspalt erfolgen, sondern es können auch zwei oder mehr Rohre um die Schweißstelle angeordnet werden, in die die Abgase hinein gesaugt werden. Die Anordnung des ringförmigen oder aus diskreten Rohröffnungen gebildeten Absaugelements kann dabei erfindungsgemäß sowohl außerhalb des Schutzgasaustritts des Brenners als auch innerhalb dessen angeordnet sein.

In einer besonders vorteilhaften Ausführungsform der erfindungsgemäßen Vorrichtung ist das Absaugelement der Absaugvorrichtung relativ zu einem Brenner verstellbar angeordnet. Ein verschiebbares Absaugelement, das längs zur Brennerachse in Richtung Schweiß- oder Lötstelle oder von dieser weg bewegt werden kann, ermöglicht eine genauere Einstellung der abgesaugten Fläche, die in einem Ausführungsbeispiel der Erfindung eine Kreisfläche sein kann.

Die Verstellbarkeit des Absaugelements sieht weiterhin vor, dass das Absaugelement quer zu einer Brennerspitze verschiebbar angeordnet ist. Die Verschiebung quer zur Brennerachse erfolgt dabei bevorzugt längs zur Richtung des Vorschubs beim Schweißen oder Löten. Dadurch wird es möglich, dass sich die Schweißstelle außerhalb des Mittelpunktes der abgesaugten Kreisfläche oder annähernden Kreisfläche befindet. Hieraus erwachsen mehrere Vorteile. Wird beispielsweise mit sehr hoher Vorschubgeschwindigkeit geschweißt oder gelötet, fällt mehr Abgas hinter der Brennerspitze an, als vor der Brennerspitze, weil die noch heiße Schweißnaht weiter raucht. Wird andererseits Aluminium geschweißt, wobei der Lichtbogen stets zwischen der Schweißstelle und einem Bereich vor der Schweißstelle wechselt, wo die Reinigung der Aluminiumoberfläche von Oxid stattfindet, erweist es sich als besonders vorteilhaft, das Absaugen auch auf den vorderen zu reinigenden Bereich auszudehnen, wo bereits Rauchgas entsteht.

Zudem hat es sich als vorteilhaft erwiesen, wenn das Absaugelement automatisch verschieb- und positionierbar ist. Dazu ist das Absaugelement mit einem Antrieb versehen, wobei die Positionierung jedoch auch auf andere Weise automatisch erfolgen kann. In jedem Falle ist das Absaugelement mit der Steuereinrichtung für den Absaugvorgang gekoppelt, sodass unter Berücksichtigung der in der Steuereinrichtung verarbeiteten Parameter eine entsprechende Position des Absaugelements festgelegt wird. Dadurch wird der Einfluss von Bedienfehlern weiter eingeschränkt, die Absaugung in ihrer Effizienz weiter verbessert und eine selbsttätige Korrektur der Position während des Schweiß- oder Lötvorgangs, beispielsweise wenn der Schweißer oder Löter mit anderen Aufgaben betraut ist, erfolgt.

Eine alternative Ausgestaltung der erfindungsgemäßen Vorrichtung ist in der Weise ausgeführt, dass das Absaugelement einen nicht runden Querschnitt an seinem Rauchgaseintritt aufweist. Auch mit einer solchen Maßnahme kann vorteilhafter Weise eine Anpassung an eine besondere Geometrie der Rauchgasentstehung erfolgen. Wird beispielsweise eine längliche, ovale an Stelle einer runden Querschnittsform gewählt, können Rauchgase längs der Schweiß- oder Lötnaht besser aufgenommen werden, während die Absaugung seitlich der Schweiß- oder Lötnaht, wo ohnehin kaum Rauchgas auftritt, eingeschränkt wird. Dadurch ist eine weitere Optimierung der Absaugung gewährleistet.

Als günstig hat sich weiterhin erwiesen, dass das Absaugelement Strömungsleitelemente in seinem Inneren aufweist. Die Strömungsleitelemente beeinflussen die Absaugströmung je nach der strömungstechnischen Gestaltung der Strömungsleitelemente. So kann eine besonders ruhige, laminare Strömung eingestellt werden. Bei anderer Ausbildung der Strömungsleitelemente kann die Abgasströmung in eine Drehung versetzt werden, die eine stabile, von Zugluft geringer beeinflussbare Absaugströmung herausbildet.

Bevorzugte Ausführungsformen der Erfindung, deren Aufbau, Funktion und Vorteile werden im Folgenden anhand der Figuren, der Zeichnungen näher erläutert, wobei
- Figur 1: schematisch ein Verfahrensschaubild einer Ausführungsform eines erfin- dungsgemäßen Schweiß- oder Lötverfahrens zeigt;
- Figur 2: schematisch eine Seitenansicht einer Ausführungsform eines erfindungs- gemäßen Brenners mit innenliegendem Absaugelement zeigt;
- Figur 3: schematisch eine Seitenansicht einer weiteren Ausführungsform eines er- findungsgemäßen Brenners mit zurückgeschobenem Absaugelement zeigt;
- Figur 4: schematisch eine Seitenansicht des Brenners aus Fig. 3 mit seitlich ver- schwenktem Absaugelement zeigt;
- Figur 5: schematisch eine teilgeschnittene Seitenansicht einer weiteren Ausfüh- rungsform eines erfindungsgemäßen Brenners mit Strömungsleitelemen- ten zeigt;
- Figur 6: schematisch eine Ansicht von unten einer Ausführungsform eines erfin- dungsgemäßen Brenners mit nicht rundem Querschnitt des Absaugele- ments zeigt;
- Figur 7: schematisch eine Ansicht von unten einer Ausführungsform eines erfin- dungsgemäßen Brenners mit nicht rundem, seitlich verschwenktem Ab- saugelement zeigt; und
- Figur 8: schematisch eine Ansicht von unten einer Ausführungsform eines erfin- dungsgemäßen Brenners mit multiplem Absaugelement zeigt.

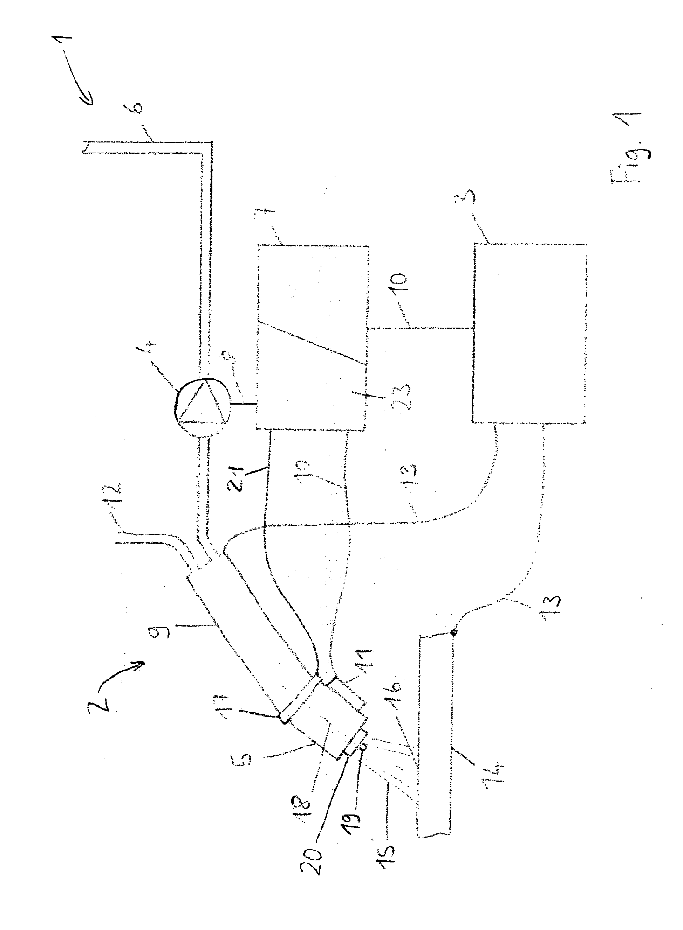

Fig. 1 zeigt schematisch ein Verfahrensschaubild einer Ausführungsform eines erfindungsgemäßen Verfahrens zum Schweißen oder Löten unter Schutzgasatmosphäre mit einer Schweiß- oder Lötvorrichtung, wobei entstehende Abgase abgesaugt werden und die Absaugung in Abhängigkeit von Prozessparametern des Schweiß- oder Lötprozesses gesteuert wird, anhand eines Lichtbogenschweißprozesses an einer Schweißvorrichtung 1.

Eine Energiequelle 3 versorgt den Schweißprozess mit zur Ausbildung des prozessbestimmenden Lichtbogens erforderlicher Elektroenergie. Dazu ist ein Brenner 9 über eine Energieversorgungsleitung 13 mit der Energiequelle 3 verbunden. Der Gegenpol, der an ein Werkstück 14 anzulegen ist, wird über eine weitere Energieversorgungsleitung 13 dem Schweißprozess zugeleitet. Die Zuführung des Schutzgases zu einer Schweißstelle 16 erfolgt in gewohnter und nach dem Stand der Technik bekannter Weise über die Schutzgaszuführung 12 zum Brenner 9. Durch den Brenner 9 hindurch wird das Schutzgas zu einer Schweißektrode 19, von wo aus sich der Lichtbogen bis zum Werkstück 14 hin erstreckt, hingeleitet. Die Schweißelektrode 19 ist von einer Schutzgasdüse 20 umgeben, aus der das Schutzgas ausströmt, die Schweißstelle 16 abdeckt und vor dem Einfluss der umgebenden Atmosphäre schützt.

Das an der Schweißstelle 16 entstehende Abgas wird von einem Absaugelement 5, das in dem gezeigten Ausführungsbeispiel konzentrisch um die Schutzgasdüse 20 angeordnet ist, abgesaugt. Dazu ist das am Brenner 9 befestigte Absaugelement 5 mit einer Abgasleitung 6 verbunden. In der Absaugleitung 6 ist ein Absauggebläse 4 angeordnet, das eine Absaugströmung erzeugt. Die Steuerung des Absauggebläses 4 erfolgt über eine Absauggebläsesteuerleitung 8, die die Steuersignale aus einer Steuereinheit 7 zum Absauggebläse 4 leitet.

Weiterhin steuert die Steuereinheit 7 die Position des Absaugelements 5. Zur Positionierung ist am Absaugelement 5 ein Verstellantrieb 17 angeordnet. Dieser empfängt über eine Verstellantriebsteuerleitung 21 die Steuersignale zum Verschieben des Absaugelements 5 längs zur Brennerachse 18, wobei das Verschieben zur Schweiß- oder Lötelektrode 19 hin oder zurück erfolgt. Weiterhin sorgt der Verstellantrieb 17 für ein Verschwenken des Absaugelements 5 quer zur Brennerachse 18.

Für die Realisierung seiner Steuerungsaufgaben erhält die Steuereinheit 7 Prozessparameter aus der Energiequelle 3, die in der Datenverarbeitungseinheit 23 verarbeitet werden. Dazu zählen solche Parameter, die durch den Bediener an der Energiequelle 3 eingestellt werden, wie einer oder mehrere der Parameter Brennervorschubgeschwindigkeit, Drahtvorschubgeschwindigkeit, Drahtdurchmesser, Drahtmaterial, Stromart und/oder -richtung. Werden diese oder weitere Parameter für das Schweiß- oder Lötverfahren nicht vom Bediener eingestellt, sondern von der Energiequelle 3 selbst ermittelt, können diese ebenfalls zur Verarbeitung der Parameter an die Datenverarbeitungseinheit 23 der Steuereinheit 7 weitergeleitet werden. Die Übertragung der Parameterdaten erfolgt über eine Datenleitung 10. Aus den Prozessparametern ermittelt die Steuereinheit 7 in einem Beispiel der Erfindung die Art des durchgeführten Schweiß- oder Lötverfahrens bzw. die jeweilige Schweißaufgabe als Entscheidungskriterium für die Festlegung der Positionierung des Absaugelements 5 und/oder der Steuerung der Intensität bzw. der Absaugleistung und/oder der Einschaltdauer bzw. des Abschaltzeitpunktes des Absauggebläses 4.

Die Absaugleistung des Absauggebläses 4 kann beispielsweise durch eine Regelung der Motorleistung des Absauggebläses 4 oder auch durch ein regelbares Ventil in der Absaugleitung erfolgen. Die Absaugleistung kann sowohl direkt an der Absaugvorrichtung 2, aber auch bei einer erfindungsgemäß ebenfalls vorsehbaren Zentralabsaugung über ein Zusatzgerät zwischen Rauchgasabsaugung bzw. Brenner 9 und Zentralabsaugung, das die Absaugleistung entsprechend der an der Schweiß- oder Lötvorrichtung voreingestellten oder einstellbaren Prozessparameter des Schweiß- oder Lötprozesses reguliert, geregelt werden. Durch die geregelte Absaugung, insbesondere durch die geregelte Absaugleistung, kann eine gleichbleibende und verbesserte Schutzgasabdeckung bei Rauchgasabsaugbrennern realisiert werden.

Der Steuereinheit 7 können weiterhin Daten zur Verfügung gestellt werden, die von einem oder mehreren Sensoren 11 ermittelt und über eine Datenleitung 10 der Steuereinheit 7 zugeleitet werden. Diese Daten sind beispielsweise eine Rauchgastemperatur, eine Rauchgaszusammensetzung, eine Konzentration von im Rauchgas vorhandenen Metallionen, ein Abstand zwischen Schweißelektrode 19 und Werkstück 14 und/oder die Art eines Lichtbogens. Die Ermittlung dieser Analysewerte in Echtzeit und ihre Zuführung zur Datenverarbeitungseinheit 23 der Steuereinheit 7 ist sehr vorteilhaft. So können veränderte Prozessbedingungen, ungeachtet ihrer Ursache, sofort in der Steuereinheit 7 verarbeitet und die Absaugung entsprechend gesteuert werden. Dadurch wird der Bediener nicht mit der Einstellung der Absaugung belastet, kann sich vollständig auf den Schweißprozess konzentrieren und scheidet als Fehlerquelle für Fehleinstellungen an der Absaugung aus. Zugleich ist ein optimaler Arbeits- und Gesundheitsschutz am Arbeitsplatz gewährleistet, da die Abgase optimal von der Schweißstelle entfernt werden, ohne die Schutzgasabdeckung an der Schweißstelle 16 zu beeinträchtigen.

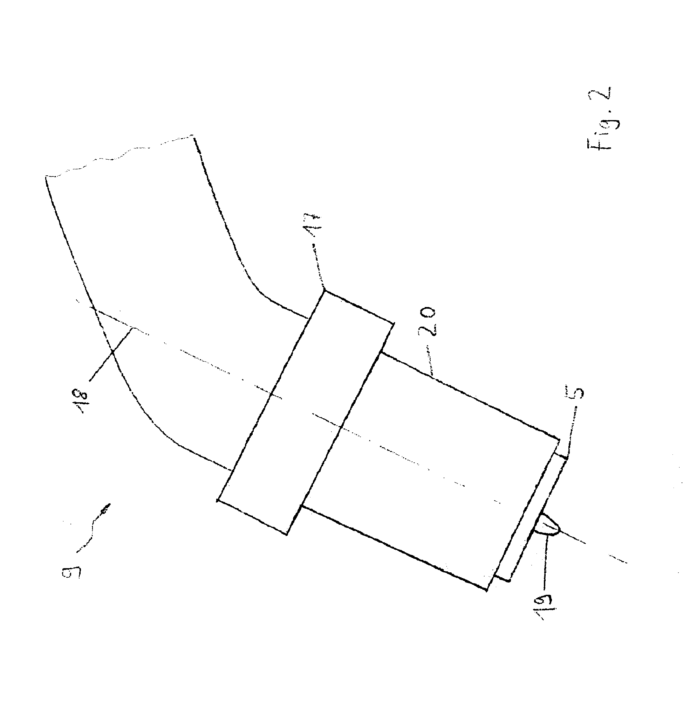

Fig. 2 zeigt schematisch eine Seitenansicht einer Ausführungsform eines erfindungsgemäßen Brenners 9. Dabei ist eine Schweiß- oder Lötelektrode 19 konzentrisch von einem Absaugelement 5 umgeben, um welches wiederum konzentrisch außen eine Schutzgasdüse 20 angeordnet ist. Diese Anordnung hat den Vorteil, dass Rauchgas und Schutzgas zusammen nach innen zu einer Schweiß- oder Lötstelle hin gesaugt werden. Dadurch wird das Risiko, dass die Schutzgasabdeckung durch die Absaugung beeinträchtigt wird, vermindert. Ein Abziehen des Schutzgases nach außen hin kann nicht erfolgen.

Ein Verstellantrieb 17 dient einem vertikalen und/oder einem quer zur Brennerachse 18 möglichen Verstellen der Position des Absaugelements 5 mit dem Ziel, durch optimale Positionierung die Absaugströmung in der Weise zu gestalten, dass das Abgas abgesaugt, jedoch die Schutzgasabdeckung nicht beeinträchtigt wird. Alternativ zum Positionieren des Absaugelements 5 kann auch eine Positionierung der Schutzgasdüse 20 in dieser Ausführungsform der erfindungsgemäßen Vorrichtung erfolgen. Die Schweiß- oder Lötelektrode 19, von der ein Lichtbogen zum hier nicht dargestellten Werkstück 14 hin verläuft, wird dadurch mehr oder weniger freigelegt. Die Verstellung des Absaugelementes 5 wird durch die in Fig. 1 dargestellte Steuereinheit 7 in Abhängigkeit von Prozessparametern des Schweiß- oder Lötprozesses bewirkt.

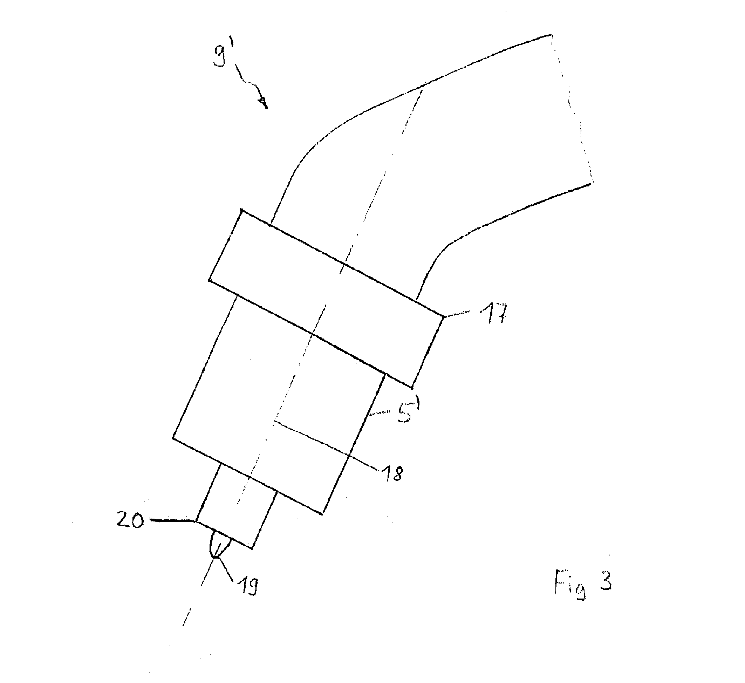

Fig. 3 zeigt schematisch eine Seitenansicht einer weiteren Ausführungsform eines erfindungsgemäßen Brenners 9'. Dabei ist eine auf einer Brennerachse 18 liegende Schweiß- oder Lötelektrode 19 konzentrisch von einer Schutzgasdüse 20 und einem Absaugelement 5' umgeben. Durch einen Verstellantrieb 17 ist ein Verschieben des Absaugelements 5' längs zur Brennerachse 18 möglich. Dadurch kann eine engere oder weitere Fokussierung auf den abzusaugenden Bereich erfolgen. Erfolgt eine Verschiebung des Absaugelements 5' in Richtung eines schematisch in Fig. 1 dargestellten Werkstückes 14, wird von einem kleineren Bereich abgesaugt, was beispielsweise bei geringer Abgasentwicklung und niedriger Vorschubgeschwindigkeit ausreichend sein kann. Zugleich ist damit eine geringere Absaugströmung erforderlich, wodurch das beispielsweise in Fig. 1 gezeigte Absauggebläse 4 bei niedrigerer Leistung betrieben werden kann. Wird das Absaugelement 5' durch den Verstellantrieb 17 hingegen vom Werkstück 14 weggezogen, erfolgt das Absaugen von einem größeren Durchmesser. Dazu muss auch eine höhere Absaugvolumenströmung erzeugt werden, was durch eine entsprechende, von der in Fig. 1 gezeigten Steuereinheit 7 vorgegebene Leistungssteigerung des Absauggebläses 4 realisiert wird.

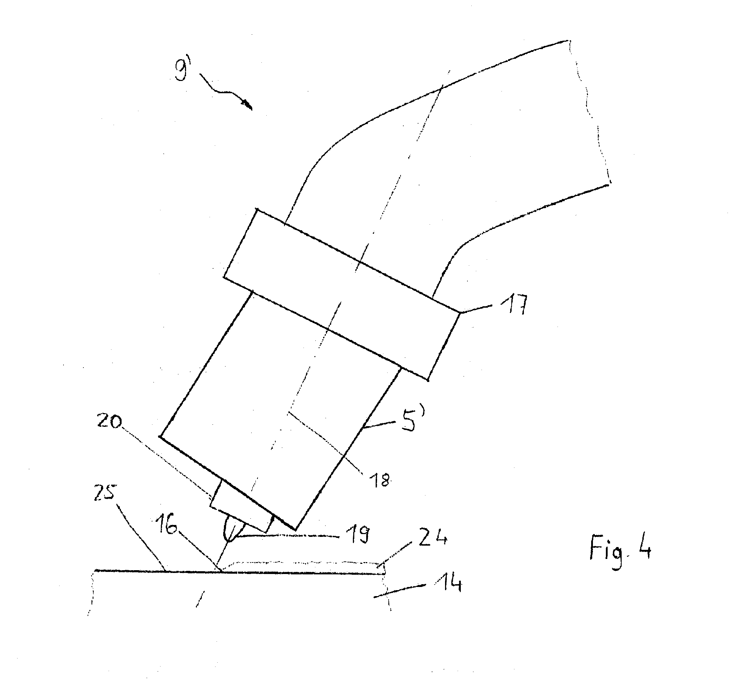

Fig. 4 zeigt schematisch eine Seitenansicht einer Ausführungsform des Brenners 9' aus Fig. 3, wobei das Absaugelement 5' gegenüber der Brennerachse 18 seitlich verschwenkt ist. Die seitliche Verschwenkung erfolgt ebenso wie das Verschieben längs zur Brennerachse 18 durch den Verstellantrieb 17 in Abhängigkeit von an der Schweiß- oder Lötvorrichtung einstellbaren oder voreingestellten Parametern des Schweiß- ode rLötprozesses. Durch die Verstellmöglichkeit quer zur Brennerachse 18 kann auf eine Abgasentwicklung, die nicht konzentrisch zur Schweiß- oder Lötelektrode 19 erfolgt, reagiert werden. Das kann beispielsweise realisiert werden, wenn bei hoher Vorschubgeschwindigkeit aus einer noch heißen Schweiß- oder Lötnaht 24 auf dem Werkstück 14 Abgas entweicht und dieses entfernt von der Schweißstelle 16 nicht mehr in den Bereich der Absaugung gelangt. In einem solchen Fall kann ein verschwenktes Absaugelement 5' in Richtung der bereits hergestellten Schweiß- oder Lötnaht 24 für eine Verbesserung der Absaugung sorgen.

Ein weiterer Anwendungsfall für das schwenkbare Absaugelement 5' ist das Aluminiumschweißen. Dabei wechselt der Lichtbogen ständig zwischen der Schweißstelle 16 und einem Bereich vor der Schweißstelle 16, wo die Aluminiumoberfläche von Oxidschichten zu reinigen ist. Um auch für einen Reinigungsbereich 25 die Absaugung von Abgasen zu gewährleiten, wird das Absaugelement 5' nach vorn, in Richtung des Schweißvorschubs, geschwenkt und saugt ebenfalls die bei der Reinigung der Aluminiumoberfläche entstehenden Abgase mit ab. Diese Position des Absaugelementes 5' ist in der Figur 4 dargestellt.

Die Fokussierung und Orientierung der Absaugströmung, wie in den Figuren 3 und 4 schematisch und beispielhaft dargestellt, ist nicht allein durch die in den beiden Ausführungsformen dargestellten Vorrichtungen realisierbar. Vielmehr sind weitere Ausgestaltungen der erfindungsgemäßen Vorrichtung in der Lage, das erfindungsgemäße Verfahren in der dargestellten Weise auszuführen.

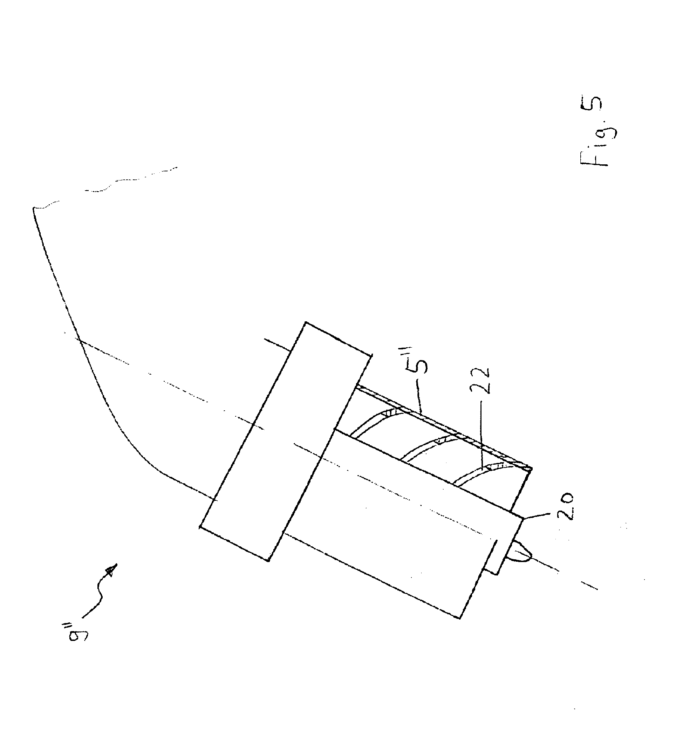

Fig. 5 zeigt schematisch eine Seitenansicht im Halbschnitt einer weiteren Ausführungsform eines erfindungsgemäßen Brenners 9". Dabei weist ein Absaugelement 5" in seinem Inneren Strömungsleitelemente 22 auf. Durch die Strömungsleitelemente 22 wird die Absaugströmung stabilisiert und die Fokussierung auf die vorgesehene von Abgas zu befreiende Fläche unterstützt. In der dargestellten bevorzugten Ausführungsform erfolgt durch wendelförmige Strömungsleitelemente 22 die Ausbildung einer tordierenden Absaugströmung, die insbesondere stabil gegen laterale Strömungseinflüsse, wie beispielsweise Zugluft, ist. Dadurch wird nicht nur eine sichere Absaugung gewährleistet, sondern auch die Schutzgasabdeckung gegen störende Seitenströmungen geschützt. Dadurch führt die Nutzung von Strömungsleitelementen 22 im Absaugelement 5" zusätzlich zu einer verbesserten Schutzgasabdeckung. Neben der Ausbildung der Strömungsleitelemente 22 in der in Figur 5 dargestellten Wendelform sind zahlreiche weitere Formen, die die Abgasströmung beeinflussen, möglich. Die Strömungsleitelemente 22 können in einer besonderen Ausgestaltung der Erfindung hinsichtlich ihrer Ausrichtung auch in Abhängigkeit von voreingestellten oder einstellbaren Prozessparametern des Schweiß- oder Lötprozesses verstellbar sein.

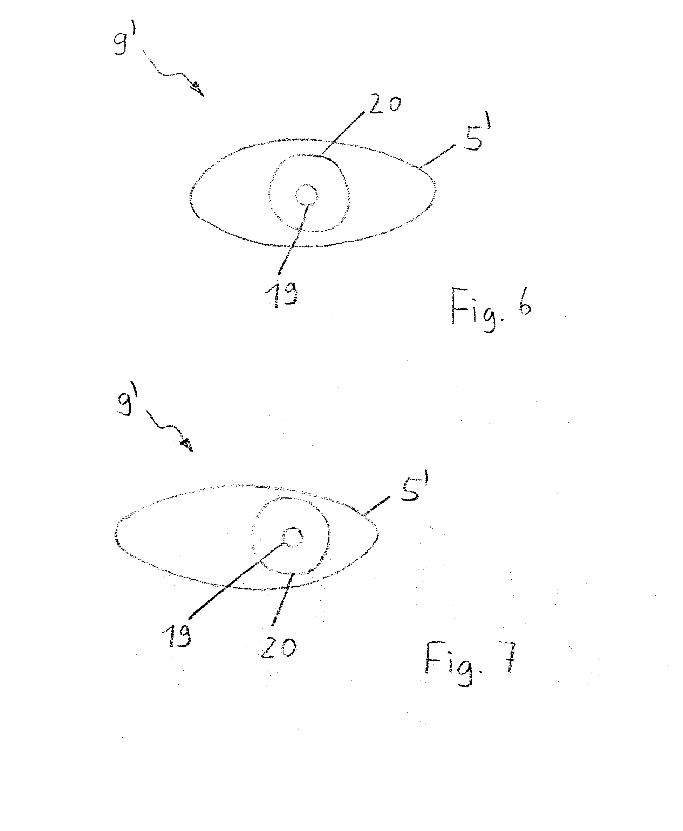

Fig. 6 zeigt schematisch eine Ansicht von unten einer weiteren Ausführungsform einer Abwandlung des erfindungsgemäßen Brenners 9" aus Fig. 2 bzw. 4, wobei das Absaugelement 5' einen nicht runden Querschnitt aufweist, Innerhalb des Absaugelements 5' sind, wie bei den bisher dargestellten Ausführungsformen auch, eine Schweiß- oder Lötelektrode 19 und eine Schutzgasdüse 20 konzentrisch darin angeordnet. In der hier gezeigten bevorzugten Ausführungsform des erfindungsgemäßen Absaugelements 5' ist dieses in einem ovalen Querschnitt angegeben. Daraus entsteht der Vorteil, dass insbesondere, wenn die Vorschubrichtung der Längsrichtung des Ovals entspricht, die Absaugung vor allem entlang der Schweiß- oder Lötnaht erfolgt, während rechts und links der Naht, wo ohnehin weniger Abgas auftritt, der geringere Teil der Absaugleistung appliziert wird. Neben der ovalen Querschnittsform des Absaugelements 5' sind weitere Querschnittsformen erfindungsgemäß.

Fig. 7 zeigt eine Abwandlung des Brenners 9' aus Fig. 4 in einer Ansicht von unten, wobei das Absaugelement 5' quer zur hier nicht dargestellten Brennerachse 18 verschwenkt ist. Damit wird auf eine Entwicklung von Abgas vor oder nach der Schweißstelle entlang der Vorschubrichtung reagiert. Beispielsweise, wie bereits ausgeführt, wird beim Aluminiumschweißen der Reinigungsbereich mit abgedeckt. Das Verschwenken erfolgt auch hierbei automatisch durch den hier nicht dargestellten Verstellantrieb, ist jedoch auf andere Weise, wie zum Beispiel auf manuelle Art, gleichfalls mit der Erfindung umfasst.

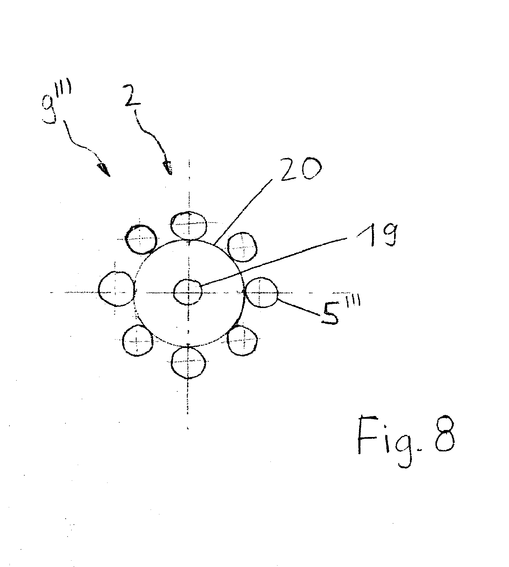

Fig. 8 zeigt schematisch eine Ansicht von unten einer Ausführungsform eines erfindungsgemäßen Brenners 9"', wobei das Absaugelement 5'" als multiples Absaugelement ausgeführt ist. Dazu ist eine Schutzgasdüse 20, in deren Zentrum sich wiederum eine Schweiß- oder Lötelektrode 19 befindet, konzentrisch von mehreren Absaugrohren umgeben. In der hier beispielhaften dargestellten Ausgestaltung sind acht Absaugrohre fest um die Schutzgasdüse 20 angeordnet. Die Absaugrohre sind über einzeln ansteuerbare Ventile, welche in Abhängigkeit von an der Schweiß- oder Lötvorrichtung einstellbaren oder voreingestellten Prozessparametern steuerbar sind, mit der Abgasleitung 6 und dem Absauggebläse 4 verbunden. Durch die ansteuerbaren Ventile, deren Steuerung ebenfalls durch die Steuereinheit 7 erfolgt, können einzelne Bereiche um die Schweißstelle herum gezielt stärker oder schwächer abgesaugt werden. Dadurch kommt es zu einer optimalen Absaugung und dem Ausbilden einer sicheren Schutzgasabdeckung. Besonderer Vorteil dieser Ausgestaltung der Erfindung ist, dass keine bewegten Elemente am Brenner 9'" in der Nähe der Schweiß- oder Lötelektrode 19 erforderlich sind. Daraus resultiert eine geringere Störanfälligkeit und auch ein geringerer Herstellungsaufwand der Absaugvorrichtung 2 des Brenners 9"'.

Neben der dargestellten bevorzugten Ausführungsform sind erfindungsgemäß auch Brenner 9'" mit einer geringeren oder größeren weniger oder mehr als der in Fig. 8 dargestellten Anzahl an Absaugrohren von der Erfindung umfasst. Weiterhin kann die Absaugung nach dieser Ausführungsform in der Weise erfolgen, dass die Ansteuerung der einzelnen Rohre unterbleibt und alle Rohre, unter Verzicht auf Ventile, die gleiche Absaugleistung aufweisen.

Durch die vorliegende Erfindung ist unabhängig von der jeweils verwendeten Ausführungsvariante eine gleichbleibende Schutzgasabdeckung, ein verringerter Energieverbrauch, ein geringerer Schutzgasverbrauch, eine bessere Schweiß- bzw. Lötnahtqualität und eine erhöhte Prozesssicherheit realisierbar.

## Patentansprüche

1. Verfahren zum Schweißen oder Löten unter Schutzgasatmosphäre mit einer Schweiß- oder Lötvorrichtung (1), wobei entstehende Abgase durch wenigstens eine Absaugvorrichtung (2) abgesaugt werden, **dadurch gekennzeichnet, dass** die Absaugung in Abhängigkeit von an der Schweiß- oder Lötvorrichtung (1) einstellbaren oder voreingestellten Prozessparametern des Schweiß- oder Lötprozesses gesteuert wird, wobei die Prozessparameter eine Brennervorschubgeschwindigkeit, eine Drahtvorschubgeschwindigkeit, einen Drahtdurchmesser, ein Drahtmaterial, eine Stromart und/oder eine Stromrichtung umfassen, und wobei einer oder mehrere dieser Prozessparameter ermittelt und in einer Datenverarbeitungseinheit (23) ausgewertet werden.

2. Verfahren nach Anspruch 1, **dadurch gekennzeichnet, dass** aus den Prozessparametern die Art des durchgeführten Schweiß- oder Lötverfahrens ermittelt wird.

3. Verfahren nach einem der vorhergehenden Ansprüche, **dadurch gekennzeichnet, dass** eine Rauchgastemperatur, eine Rauchgaszusammensetzung, eine Konzentration von im Rauchgas vorhandenen Metallionen, ein Abstand zwischen Brennerspitze und Werkstück und/oder die Art eines Lichtbogens erfasst und zusätzlich zu den Prozessparametern zur Steuerung der Absaugung verwendet werden.

4. Verfahren nach einem der vorhergehenden Ansprüche, **dadurch gekennzeichnet, dass** die Absaugung koaxial zu einem Schutzgasaustritt eines Brenners (9) durchgeführt wird.

5. Verfahren nach einem der vorhergehenden Ansprüche, **dadurch gekennzeichnet, dass** ein Volumenstrom einer Absaugströmung in Abhängigkeit von den Prozessparametern des Schweiß- oder Lötprozesses gesteuert wird.

6. Verfahren nach einem der vorhergehenden Ansprüche, **dadurch gekennzeichnet, dass** eine Position eines Absaugelements (5, 5') der Absaugvorrichtung (2) relativ zu einer Brennerachse (18) in Abhängigkeit von den Prozessparametern des Schweiß- oder Lötprozesses gesteuert wird.

7. Vorrichtung (1) zum Schweißen oder Löten unter Schutzgasatmosphäre mit wenigstens einer Absaugvorrichtung (2) zum Absaugen von entstehenden Abgasen, **dadurch gekennzeichnet, dass** die Absaugvorrichtung (2) eine Steuereinheit (7) aufweist, die mit einer Energiequelle (3) für den Schweiß- oder Lötprozess über eine Datenleitung (10) für Prozessparameter des Schweiß- oder Lötprozesses gekoppelt ist, wobei die Prozessparameter eine Brennervorschubgeschwindigkeit, eine Drahtvorschubgeschwindigkeit, einen Drahtdurchmesser, ein Drahtmaterial, eine Stromart und/oder eine Stromrichtung umfassen und die Steuereinheit (7) eine Datenverarbeitungseinheit (23) aufweist, in der die Prozessparameter verarbeitet werden.

8. Vorrichtung nach Anspruch 7, **dadurch gekennzeichnet, dass** die Steuereinheit (7) die Datenverarbeitungseinheit (23) zur Ermittlung der Art des durchgeführten Schweiß- oder Lötprozesses aufweist.

9. Vorrichtung nach Anspruch 7 oder 8, **dadurch gekennzeichnet, dass** die Datenverarbeitungseinheit (23) mit wenigstens einem an oder in der Vorrichtung (1) zum Schweißen oder Löten vorgesehenen Sensor (11) zum Ermitteln einer Rauchgastemperatur, einer Rauchgaszusammensetzung, einer Konzentration von im Rauchgas vorhandenen Metallionen, einem Abstand zwischen Schweiß- oder Lötelektrode (19) und Werkstück (14) und/oder der Art eines Lichtbogens gekoppelt ist.

10. Vorrichtung nach einem der Ansprüche 7 bis 9, **dadurch gekennzeichnet, dass** ein Absaugelement (5) der Absaugvorrichtung (2) koaxial zu einem Schutzgasaustritt eines Brenners (9) angeordnet ist.

11. Vorrichtung nach einem der Ansprüche 7 bis10, **dadurch gekennzeichnet, dass** das Absaugelement (5, 5') der Absaugvorrichtung (2) relativ zu einem Brenner (9, 9') verstellbar angeordnet ist.

12. Vorrichtung nach einem der Ansprüche 10 oder 11, **dadurch gekennzeichnet, dass** das Absaugelement (5') einen nicht runden Querschnitt an seinem Rauchgaseintritt aufweist.

13. Vorrichtung nach einem der Ansprüche 10 bis12, **dadurch gekennzeichnet, dass** das Absaugelement (5") Strömungsleitelemente (22) in seinem Inneren aufweist.

## Claims

1. A method for welding or soldering under inert gas atmosphere with a welding or soldering appliance (1) where generated fumes will be extracted by at least one suction device (2) **characterized in that** the suction is regulated in dependence of the process parameters of the welding or soldering process which are set or pre-set on the welding or soldering appliance (1), where the process parameters comprise a welding torch feeding speed, a wire feeding speed, a wire diameter, a wire material, a type of current and/or a direction of current, and where one or more of these process parameters are determined and analyzed in a data processing unit (23).

2. A method according to claim no. 1 **characterized in that** the kind of the executed welding or soldering process is determined from the process parameters.

3. A method according to any one of the preceding claims **characterized in that** a fume temperature, a fume composition, a concentration of metal ions present in the fume, a distance between torch tip and workpiece and/or the kind of arc are detected and in addition to the process parameters used for the suction control.

4. A method according to any one of the preceding claims **characterized in that** the suction is carried out in coaxial position to an inert gas escape of a torch (9).

5. A method according to any one of the preceding claims **characterized in that** a volumen flow of a suction stream is regulated in dependence of the process parameters of the welding or soldering process.

6. A method according to any one of the preceding claims **characterized in that** a position of a suction element (5, 5') of the suction device (2) is controlled in relation to a torch axis (18) in dependence of the process parameters of the welding or soldering process.

7. An appliance (1) for welding or soldering under inert gas atmosphere with at least one suction device (2) to extract generated fumes **characterized in that** the suction device (2) offers a control unit (7) which is connected through a data line (10) for process parameters of the welding or soldering process to an energy source (3) for the welding or soldering process, where the process parameters comprise a welding torch feeding speed, a wire feeding speed, a wire diameter, a wire material, a type of current and/or a direction of current, and the control unit (7) offers a data processing unit (23) where the process parameters are processed.

8. An appliance according to claim no. 7 **characterized in that** the control unit (7) offers the data processing unit (23) for the determination of the kind of welding or soldering process which is being carried out.

9. An appliance according to claim no. 7 or 8 **characterized in that** the data processing unit (23) is connected to at least one sensor (11) on or inside the appliance (1) for welding or soldering designated for the detection of a fume temperature, a fume composition, a concentration of metal ions present in the fume, a distance between welding or soldering electrode (19) and workpiece (14) and/or the kind of arc.

10. An appliance according to any one of the claims no. 7 to 9, **characterized in that** a suction element (5) of the suction device (2) is arranged in a coaxial position to an inert gas escape of a torch (9).

11. An appliance according to any one of the claims no. 7 to 10, **characterized in that** the suction element (5, 5') of the suction device (2) is adjustably arranged with respect to a torch (9, 9').

12. An appliance according to any one of the claims no. 10 or 11, **characterized in that** the suction element (5') offers a not round cross-section at its fumes inlet.

13. An appliance according to any one of the claims no. 10 to 12, **characterized in that** the suction element (5") provides flow-guiding elements (22) in its interior.

## Revendications

1. Procédé pour souder sous une atmosphère de gaz de protection avec un dispositif de soudage (1), par lequel les gaz d'échappement naissants sont aspirés au moins par un dispositif d'aspiration (2), **caractérisé en ce que**, l'aspiration en fonction du dispositif d'aspiration (1) est dirigée selon des paramètres de processus de soudage réglables ou préréglés. Processus où les paramètres comprennent une vitesse d'alimentation de brûleur, une vitesse d'alimentation de fil, un type de courant et/ou une direction de courant et par lequel un ou plusieurs paramètres de processus sont établis et exploités dans une unité de traitement de données (23).

2. Procédé selon la revendication 1, **caractérisé en ce que** le type de procédé de soudure entrepris est établi à partir des paramètres de processus.

3. Procédé d'après une revendication précédente, **caractérisé en ce qu'**il comprend une température de gaz de fumée, une composition de gaz de fumée, une concentration d'ions métalliques existants dans le gaz de fumée, une distance entre la pointe du brûleur et la pièce à souder et/ou un type d'arc électrique et qu'ils (ces paramètres) sont utilisés en complément aux paramètres de processus pour la direction de l'aspiration.

4. Procédé d'après une revendication précédente, **caractérisé en ce que** l'aspiration est conduite selon un axe coaxial à l'émission du gaz de protection d'un brûleur (9).

5. Procédé d'après une revendication précédente, **caractérisé en ce que** le courant du volume d'un courant d'aspiration est dirigé en fonction des paramètres de processus de soudure.

6. Procédé d'après une revendication précédente, **caractérisé en ce qu'**une position d'un élément d'aspiration (5, 5') d'un dispositif d'aspiration (2) relatif à un axe de brûlure (18) est dirigée en fonction des paramètres de processus de soudure.

7. Dispositif (1) pour la soudure sous une atmosphère de gaz de protection avec au moins un dispositif d'aspiration (2) pour l'aspiration des gaz d'échappement naissants, **caractérisé en ce que** le dispositif d'aspiration (2) présente une unité de direction (7), couplée avec une source d'énergie (3) pour le processus de soudure sur une ligne de données (10) pour les paramètres de processus de soudure. Paramètre de processus qui comprennent une vitesse d'alimentation de brûlure, une vitesse d'alimentation de fil, un diamètre de fil, un matériau de fil, un type de courant et/ou une direction de courant et l'unité de direction (7) présente une unité de traitement des données (23), dans laquelle les paramètres de processus sont traités.

8. Dispositif d'après la revendication 7, **caractérisé en ce que** l'unité de direction (7) comprend une unité de traitement des données (23) pour la désignation du type de processus de soudure entrepris.

9. Dispositif d'après la revendication 7 ou 8, **caractérisé en ce que** l'unité de traitement des données (23) est couplée avec au moins un ou capteur prévu pour la soudure sur ou dans le dispositif (1) pour la désignation d'une température de gaz de fumée, d'une composition d'un gaz de fumée, d'une concentration d'ions métalliques présents dans le gaz de fumée, une distance entre l'électrode de soudure (19) et la pièce à travailler (14) et/ou le type d'arc électrique.

10. Dispositif d'après une des revendications 7 à 9, **caractérisé en ce qu'**un élément d'aspiration (5) du dispositif d'aspiration (2) est ordonné de manière coaxiale à une émission de gaz de protection d'un brûleur (9).

11. Dispositif d'après une des revendications 7 à 10, **caractérisé en ce que** l'élément d'aspiration (5, 5') du dispositif d'aspiration (2) est ordonné de manière réglable relative à un brûleur (9, 9').

12. Dispositif d'après une des revendications 10 ou 11, **caractérisé en ce que** l'élément d'aspiration (5') présente une coupe transversale non ronde sur son entrée de gaz de fumée.

13. Dispositif d'après une des revendications 10 à 12, **caractérisé en ce que** l'élément d'aspiration (5") comporte en son sein des éléments de fond de courant (22).
